# EUROPEAN PATENT SPECIFICATION

(11) **EP 3 838 875 B1**
(45) Date of publication and mention of the grant of the patent: **10.01.2024**
(21) Application number: 20209220.1
(22) Date of filing: 23.11.2020
(51) Int. Cl.: C05F 11/00, C05G 5/20

(54) **COMPOSITION OF NATURAL INGREDIENTS FOR NUTRITION OF INDOOR- AND OUTDOOR FIELDS OF GRASS, METHOD OF MANUFACTURING SUCH A COMPOSITION, AND USE OF SUCH A COMPOSITION**
ZUSAMMENSETZUNG AUS NATÜRLICHEN INHALTSSTOFFEN ZUR ERNÄHRUNG VON GRASFELDERN IM INNEN- UND AUSSENBEREICH, VERFAHREN ZUR HERSTELLUNG EINER SOLCHEN ZUSAMMENSETZUNG UND VERWENDUNG EINER SOLCHEN ZUSAMMENSETZUNG
COMPOSITION D'INGRÉDIENTS NATURELS POUR LA NUTRITION DES CHAMPS D'HERBE INTÉRIEURS ET EXTÉRIEURS, PROCÉDÉ DE FABRICATION D'UNE TELLE COMPOSITION ET UTILISATION D'UNE TELLE COMPOSITION

(30) Priority: 16.12.2019 NL 2024465
(43) Date of publication of application: 23.06.2021
(73) Proprietor: Redipro B.V., 3439 MB Nieuwegein (NL)
(72) Inventor: VAN GARDEREN, Willem Govert, 3439 MB Nieuwegein (NL)
(74) Representative: van Breda, Jacobus

(56) References cited:
- FR-A1- 2 910 469
- KR-A- 20040 059 591
- US-A- 4 846 870
- US-A1- 2016 340 264

## Description

The invention relates to a composition of natural ingredients for nutrition of indoor- and outdoor fields of grass. The invention further relates to a method for nutrition of indoor- and outdoor fields of grass with such a composition, and to the use of the composition of natural ingredients for nutrition of indoor- and outdoor fields of grass.

Quite often fields of grass suffer from imbalance, an unbalanced nutritional situation and all kinds of abiotic stress. This disturbs the natural balance of the soil and leads to irregularities in the fields of grass that are less vital than possible. If the fields of grass are used as playground for soccer or golf, they are easily damaged, which reduces the possible playtime. Maintaining the fields of grass is furthermore labour-intensive and therefore costly. Fertilizers for grass surfaces are known from KR20040059591 A, US4846870 and FR2910469 A1.

It is an object of the invention to alleviate these problems of the prior art, which destroys the soil life and gives a disease-sensitive and weak grass cover.

It is a further object to provide fields of grass with vital grasses, and to ensure a resilient and vital turf with an optimal soil life that is resistant to all stress factors, wherein the fields of grass require only little maintenance, and which fields of grass can endure prolonged use for all types of sports or other activities, such as events.

According to the invention a composition of natural ingredients for nutrition of indoor- and outdoor fields of grass, a method of manufacturing such a composition, and the use of such a composition are proposed in accordance with any one of the appended claims.

According to a first aspect of the invention said composition of natural ingredients for nutrition of indoor- and outdoor fields of grass comprises a juice derived from chopped wild grass, and microalgae from the class of Chlorophyceaea. It is found that the application of this composition of only natural ingredients makes it possible to provide sufficient and effective nutrition, obviating the need to apply any artificial means such as chemical treatment and fertilizer.

In certain circumstances it is desirable that said composition further comprises at least an addition of dietary elements such as an organic nitrogen and iron. This provides additional nutrition which may in particular be helpful in selected periods of the growing season.

It is found that the best results are achieved by arranging that the fields of grass are treated with a cut from spring and a cut from autumn.

It is preferable that said grass mown in spring is a first cut, i.e. is not previously cut in spring.

It is further preferable that said grass mown in autumn has been cut only once before in autumn or is a first cut in autumn.

In another aspect of the invention relating to a method for manufacturing such a composition of natural ingredients for nutrition of indoor- and outdoor fields of grass it is preferable that hand dry grass is mown and the mown grass is collected and subsequently pressed into a juice.

According to further preferred steps of the method according to the invention the juice is stirred for a predetermined period of not less than one week, followed by dilution with water in a one-to-one proportion.

Then preferably the diluted juice is mixed with microalgae in a one-to-one proportion.

Finally the mixture of juice and microalgae is preferably placed and kept in a storage for at least two weeks, wherein in said storage the mixture is continuously kept in motion.

In still another aspect of the invention relating to the use of said composition of natural ingredients for nutrition of indoor- and outdoor fields of grass it is preferred that the composition is applied to a lawn in January, February, April, June, August and October.

It is further preferred that the application in January, April and October relates at least to the application of the composition according to the appended claim 1.

Further preferably the application in February, June and August relates at least to the application of the composition according to claim 2.

The invention will hereinafter be further elucidated with reference to the following exemplary embodiment which is not limiting as to the appended claims.

In a method of manufacturing a composition of natural ingredients for nutrition of indoor- and outdoor fields of grass, a spring cut of wild grass not earlier mown is collected and mixed with a first cut in autumn of such wild grass.

This mixture of spring grass and autumn grass is chopped and pressed in an industrial press to release the juices from the grass mixture.

The juice is collected in an 800 L industrial bulk container and stirred for approximately two weeks. After this stirring period, the juice is split into two equal fractions of 400 L, and each 400 L fraction is diluted with 400 L of water.

After standing for a period of about two weeks the diluted juice fractions are filtered and further split into 400 L diluted juice fractions, and each diluted juice fraction is supplied with 400 L of microalgae to a mixture of 800 L.

After approximately two weeks the 800 L mixtures of juice and microalgae are seaved and stored in a storage vessel. The mixture is kept in motion in said storage vessel and aerated. After a stay of approximately four weeks in the storage vessel, the composition is said vessel is ready for use.

Use of the composition preferably follows the scheme of applying the composition to a lawn in the midst of the months January, February, April, June, August and October. The application in January, April and October relates at least to the application of a composition that comprises a juice derived from chopped wild grass, and micro-algae from the class of Chlorophyceaea. The application in February, June and August relates at least to the application of such composition which further comprises at least an addition of dietary elements such as an organic nitrogen and iron.

It is preferred that 1 L of the composition is diluted with 3 L of water. 4 L of such diluted composition is sufficient to treat a lawn of one thousand square meters.

Although the invention has been discussed in the foregoing with reference to an exemplary embodiment of the composition, use of the composition and method of manufacturing such composition, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

## Claims

1. Composition of natural ingredients for nutrition of indoor- and outdoor fields of grass, **characterized in that** said composition comprises a juice derived from chopped wild grass, and microalgae from the class of Chlorophyceaea.

2. Composition according to claim 1, **characterized in that** said composition further comprises an addition of dietary elements such as an organic nitrogen and iron.

3. Composition according to any one of claims 1 - 2, **characterized in that** said chopped wild grass is a mixture of grass mown in spring and grass mown in the autumn.

4. Composition according to claim 3, **characterized in that** said grass mown in spring is a first cut, i.e. is not previously cut in spring.

5. Composition according to claim 3 or 4, **characterized in that** said grass mown in autumn has been cut only once before in autumn or is a first cut in autumn.

6. Method for manufacturing a composition of natural ingredients for nutrition of indoor- and outdoor fields of grass according to any one of claims 1 - 5, **characterized in that** hand dry grass is mown and the mown grass is collected and subsequently pressed into a juice.

7. Method according to claim 6, **characterized in that** the juice is stirred for a predetermined period of not less than one week, followed by dilution with water in a one-to-one proportion.

8. Method according to claim 7, **characterized in that** the diluted juice is mixed with microalgae in a one-to-one proportion.

9. Method according to claim 8, **characterized in that** the mixture of juice and microalgae is placed and kept in a storage for at least two weeks, wherein in said storage the mixture is continuously kept in motion.

10. Use of a composition of natural ingredients for nutrition of indoor- and outdoor fields of grass according to any one of claims 1 - 5, **characterized in that** the composition is applied to a lawn in January, February, April, June, August and October.

11. Use according to claim 10, **characterized in that** the application in January, April and October relates at least to the application of the composition according to claim 1.

12. Use according to claim 10 or 11, **characterized in that** the application in February, June and August relates at least to the application of the composition according to claim 2.

## Patentansprüche

1. Zusammensetzung aus natürlichen Inhaltsstoffen zur Ernährung von Grasfeldern im Innen- und Außenbereich, **dadurch gekennzeichnet, dass** die Zusammensetzung einen Saft, der aus gehäckseltem Wildgras und Mikroalgen aus der Klasse der Chlorophyceaea gewonnen wird, aufweist.

2. Zusammensetzung nach Anspruch 1, **dadurch gekennzeichnet, dass** die Zusammensetzung weiterhin einen Zusatz von dietätischen Bestandteilen wie etwa organischen Stickstoff und Eisen aufweist.

3. Zusammensetzung nach einem der Ansprüche 1 - 2, **dadurch gekennzeichnet, dass** das gehäckselte Wildgras eine Mischung aus im Frühjahr gemähtem Gras und im Herbst gemähtem Gras ist.

4. Zusammensetzung nach Anspruch 3, **dadurch gekennzeichnet, dass** es sich bei dem im Frühjahr gemähten Gras um einen Erstschnitt handelt, d. h. dass es im Frühjahr zuvor noch nicht gemäht wurde.

5. Zusammensetzung nach Anspruch 3 oder 4, **dadurch gekennzeichnet, dass** das im Herbst gemähte Gras nur einmal zuvor im Herbst gemäht wurde oder eine erster Schnitt im Herbst ist.

6. Verfahren zum Herstellen einer Zusammensetzung aus natürlichen Inhaltsstoffen zur Ernährung von Grasfeldern im Innen- und Außenbereich nach einem der Ansprüche 1 - 5, **dadurch gekennzeichnet, dass** handtrockenes Gras gemäht und das gemähte Gras gesammelt und anschließend zu einem Saft gepresst wird.

7. Verfahren nach Anspruch 6, **dadurch gekennzeichnet, dass** der Saft für eine vorgegebene Zeitspanne von nicht weniger als einer Woche gerührt wird, gefolgt von einer Verdünnung mit Wasser in einem Eins-zu-eins-Verhältnis.

8. Verfahren nach Anspruch 7, **dadurch gekennzeichnet, dass** der verdünnte Saft mit Mikroalgen in einem Eins-zu-eins-Verhältnis gemischt wird.

9. Verfahren nach Anspruch 8, **dadurch gekennzeichnet, dass** die Mischung aus Saft und Mikroalgen für zumindest zwei Wochen in einem Speicher platziert und behalten wird, wobei die Mischung in dem Speicher kontinuierlich in Bewegung gehalten wird.

10. Verwendung einer Zusammensetzung aus natürlichen Inhaltsstoffen zur Ernährung von Grasfeldern im Innen- und Außenbereich nach einem der Ansprüche 1 - 5, **dadurch gekennzeichnet, dass** die Zusammensetzung im Januar, Februar, April, Juni, August und Oktober auf einen Rasen aufgebracht wird.

11. Verwendung nach Anspruch 10, **dadurch gekennzeichnet, dass** sich die Anwendung im Januar, April und Oktober zumindest auf die Anwendung der Zusammensetzung nach Anspruch 1 bezieht.

12. Verwendung nach Anspruch 10 oder 11, **dadurch gekennzeichnet, dass** sich die Anwendung im Februar, Juni und August zumindest auf die Anwendung der Zusammensetzung nach Anspruch 2 bezieht.

## Revendications

1. Composition d'ingrédients naturels pour la nutrition de champs d'herbe intérieurs et extérieurs, **caractérisée en ce que** ladite composition comprend un jus dérivé d'herbes sauvages hachées, et des microalgues de la classe des Chlorophycées.

2. Composition selon la revendication 1, **caractérisée en ce que** ladite composition comprend en outre un ajout d'éléments nutritifs, tels qu'un azote organique et du fer.

3. Composition selon l'une quelconque des revendications 1 à 2, **caractérisée en ce que** ladite herbe sauvage hachée est un mélange d'herbe tondue au printemps et d'herbe tondue en automne.

4. Composition selon la revendication 3, **caractérisée en ce que** ladite herbe tondue au printemps est une première coupe, c'est-à-dire n'est pas préalablement coupée au printemps.

5. Composition selon la revendication 3 ou 4, **caractérisée en ce que** ladite herbe tondue en automne n'a été coupée qu'une seule fois auparavant en automne ou est une première coupe en automne.

6. Procédé de fabrication d'une composition d'ingrédients naturels pour la nutrition de champs d'herbe intérieurs et extérieurs selon l'une quelconque des revendications 1 à 5, **caractérisé en ce que** l'herbe sèche au toucher est tondue et l'herbe tondue est collectée et ensuite pressée pour donner un jus.

7. Procédé selon la revendication 6, **caractérisé en ce que** le jus est agité pendant une période prédéterminée non inférieure à une semaine, suivi d'une dilution avec de l'eau dans une proportion de un pour un.

8. Procédé selon la revendication 7, **caractérisé en ce que** le jus dilué est mélangé à des microalgues dans une proportion de un pour un.

9. Procédé selon la revendication 8, **caractérisé en ce que** le mélange de jus et de microalgues est placé et conservé dans un stockage pendant au moins deux semaines, dans lequel, dans ledit stockage, le mélange est maintenu continuellement en mouvement.

10. Utilisation d'une composition d'ingrédients naturels pour la nutrition de champs de d'herbe intérieurs et extérieurs selon l'une quelconque des revendications 1 à 5, **caractérisée en ce que** la composition est appliquée sur une pelouse en janvier, février, avril, juin, août et octobre.

11. Utilisation selon la revendication 10, **caractérisée en ce que** l'application en janvier, avril et octobre concerne au moins l'application de la composition selon la revendication 1.

12. Utilisation selon la revendication 10 ou 11, **caractérisée en ce que** l'application en février, juin et août concerne au moins l'application de la composition selon la revendication 2.
